# EUROPEAN PATENT SPECIFICATION

(11) **EP 2 495 191 B1**
(45) Date of publication and mention of the grant of the patent: **22.10.2014**
(21) Application number: 12152174.4
(22) Date of filing: 23.01.2012
(51) Int. Cl.: B65G 47/14, D01H 9/18

(54) **Bobbin delivering device and automatic winder**
Spulenlieferungsvorrichtung und automatische Aufspulmaschine
Dispositif d' alimentation de bobines et bobinoir automatique

(30) Priority: 04.03.2011 JP 2011048096
(43) Date of publication of application: 05.09.2012
(73) Proprietor: Murata Machinery, Ltd., Minami-ku Kyoto-shi Kyoto 601-8326 (JP)
(72) Inventor: Inoue, Kei, Kyoto, Kyoto 612-8686 (JP)
(74) Representative: Beck, Alexander

(56) References cited:
- EP-A1- 2 088 096
- EP-A2- 1 086 920
- US-A- 3 531 016
- US-A- 5 195 687

## Description

### BACKGROUND OF THE INVENTION

### 1. Field of the Invention

The present invention relates to a bobbin delivering device that delivers yarn supplying bobbins to a yarn winding apparatus such as an automatic winder.

### 2. Description of the Related Art

Bobbin delivering devices that deliver yarn supplying bobbins to each of winder units of an automatic winder are known in the art. One such cop (bobbin) delivering device is disclosed in Japanese Patent Application Laid-open No. H8-337317.

In the cop delivering device disclosed in Japanese Patent Application Laid-open No. H8-337317, a pile of cops (yarn supplying bobbins) is loaded on a wagon and transported to the bobbin delivering device. Subsequently, an unloading device reverses and tilts the wagon to step-by-step unload the pile of the cops from the wagon onto a conveyor device. The conveyor device divides the pile of the cops into a small number of the cops and delivers the small number of the cops into a feeder bowl of a vibration-type parts feeder. Thereafter, the parts feeder and a subsequent isolating conveyor isolate and deliver the cops one by one from the feeder bowl to an orientation determining section. The cops are then passed through an alignment chute and made to slide over a waiting peg of an empty tray arranged below the alignment chute.

Meanwhile, a bobbin delivering system disclosed in Japanese Patent Application Laid-open No. H9-100067 includes a magazine device in which several dozens of bobbins can be loaded. The magazine device is revolved to sequentially deliver the bobbins to a tray.

In the cop delivering device disclosed in Japanese Patent Application Laid-open No. H8-337317, the feeder bowl functions as an isolation mechanism that isolates and supplies the cops one by one to the next process. However, a larger space needs to be secured in a horizontal direction above the isolation mechanism. Furthermore, the conveyor device is required to regulate beforehand the number of the cops to be delivered into the feeder bowl. Consequently, the device requires a large installation area. Furthermore, because the structure disclosed in Japanese Patent Application Laid-open No. H8-337317 involves isolating the cops while sequentially dropping the cops from a height, many operations, including the operation of introduction of the cops by the unloading device, are performed at a position that is elevated above an installation surface, leading to poor visibility and operability.

On the other hand, the magazine-type bobbin delivering device disclosed in Japanese Patent Application Laid-open No. H9-100067 is compact and does not require much space. However, the structure disclosed in Japanese Patent Application Laid-open No. H9-100067 requires an operator to load the bobbins one by one in the magazine device, putting a tremendous workload on the operator.

### SUMMARY OF THE INVENTION

The present invention has been made in view of the problem described above, and it is an object of the present invention to provide a bobbin delivering device that is space-saving and that puts less workload on an operator.

According to an aspect of the present invention, a bobbin delivering device includes a bobbin introduction section that receives a pile of yarn supplying bobbins with yarns wound thereon; and an isolation section that isolates the yarn supplying bobbins from the pile of the yarn supplying bobbins introduced into the bobbin introduction section. The bobbin introduction section includes a reservoir member that temporarily holds the pile of the yarn supplying bobbins, a guiding member that guides the yarn supplying bobbins up to the isolation section, and a fixed-number transporting member that is arranged between the reservoir member and the guiding member. The fixed-number transporting member includes a pivoting member that pivots to allow only a predetermined number of the yarn supplying bobbins from the pile of the yarn supplying bobbins in the reservoir member to be transported to the guiding member.

The above and other objects, features, advantages and the technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a cross-sectional front view of a bobbin delivering device according to an embodiment of the present invention;
FIG. 2 is a perspective view of the bobbin delivering device shown in FIG. 1;
FIG. 3 is a perspective view of an isolation section shown in FIG. 2;
FIG. 4 is an enlarged cross-sectional side view of a portion of the isolation section;
FIG. 5 is an enlarged perspective view of a portion of the isolation section;
FIG. 6 is a plan view of the bobbin delivering device shown in FIG. 1;
FIG. 7 is a perspective view of a pivoting member shown in FIG. 6;
FIG. 8 is a cross-sectional front view of the bobbin delivering device shown in FIG. 1 in a state in which a transporting plate faces a reservoir member; and
FIG. 9 is a cross-sectional front view of the bobbin delivering device shown in FIG. 1 in a state in which bobbins are being transported by the transporting plate to a guiding member.

### DETAILED DESCRIPTION OF THE PREFERRED EMBODIMENTS

Exemplary embodiments of the present invention are explained below with reference to the accompanying drawings. An automatic winder 10 according to an embodiment of the present invention includes a plurality of not shown winder units, a bobbin transporting device 11, and a bobbin delivering device 12.

The winder unit unwinds a yarn from a yarn supplying bobbin 9, and rewinds the yarn on a winding bobbin to produce a package.

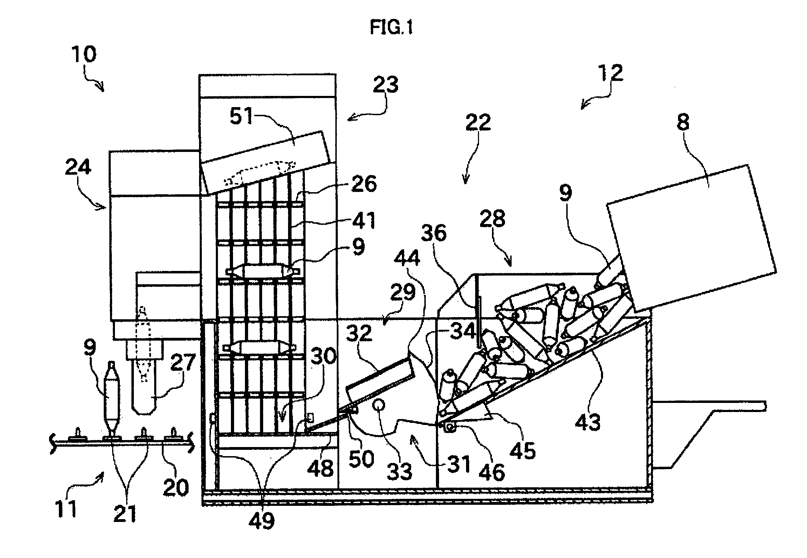

The bobbin transporting device 11 includes a bobbin transport path 20, such as, a conveyor, and several transporting trays 21 that are transported over the bobbin transport path 20. As shown in FIG. 1, the yarn supplying bobbin 9 is arranged in a substantially upright posture on the transporting tray 21. The bobbin transport path 20 transports the transporting trays 21 with the yarn supplying bobbins 9 set thereon to each of the not shown winder units. In this manner, the yarn supplying bobbins 9 are delivered automatically to each of the winder units.

A yarn has been wound on the yarn supplying bobbin 9. A spinning machine or the like is used to wind the yarn on the yarn supplying bobbin 9. The yarn supplying bobbins 9 prepared by the spinning machine are put into a container 8 or the like, and transported up to the automatic winder 10. Tremendous workload will be put on an operator if the operator is to do the job of loading the yarn supplying bobbins 9 one by one from the container 8 to the transporting trays 21. To solve this issue, the bobbin delivering device 12 according to the present embodiment separates (isolates) the yarn supplying bobbins 9 one by one and loads the separated yarn supplying bobbin 9 on each of the transporting trays 21.

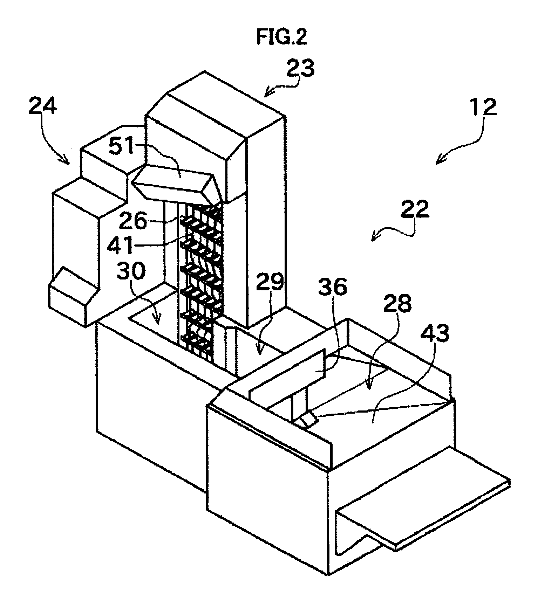

As shown in FIGS. 1 and 2, the bobbin delivering device 12 according to the present embodiment includes a bobbin introduction section 22, an isolation section 23, and a tray placement section 24.

The yarn supplying bobbins 9 in the container 8 are introduced into the bobbin introduction section 22. The isolation section 23 isolates the yarn supplying bobbins 9 by picking the yarn supplying bobbins 9 one by one from the pile of the yarn supplying bobbins 9 introduced into the bobbin introduction section 22.

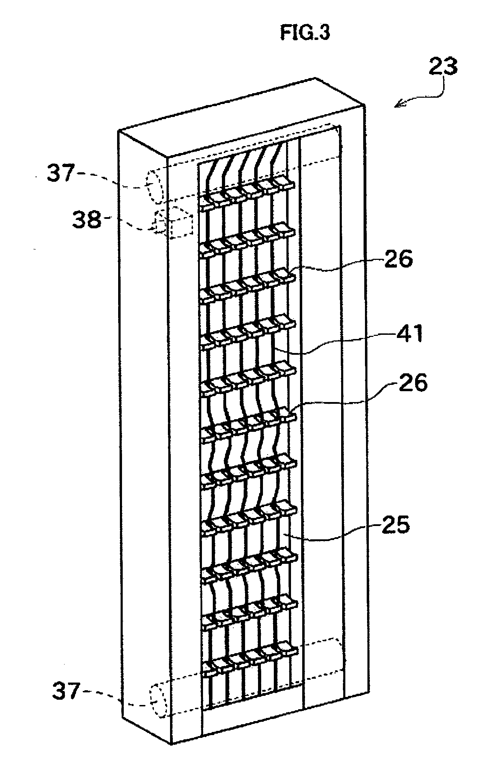

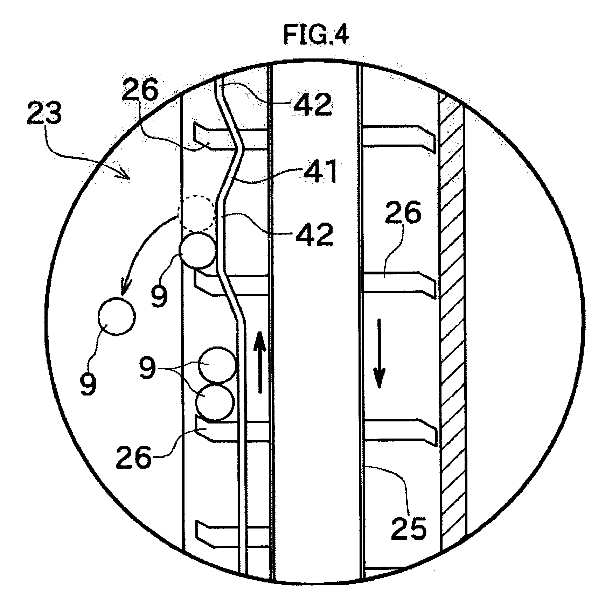

The isolation section 23 has a structure of a conveyor that is arranged vertically. Specifically, as shown in FIGS. 3 and 4, the isolation section 23 includes an endless loop belt 25, and a plurality of bobbin plates (bobbin receiving members) 26. The bobbin plates are arranged on an outer periphery of the endless loop belt 25 at substantially equal intervals in a longitudinal direction of the endless loop belt 25.

The endless loop belt 25 is a band-like (sheet-like) member stretched across two rotary rollers 37 to form a loop. One of the rotary rollers 37 (upper rotary roller) is arranged above the other rotary roller 37. The upper rotary roller 37 is driven to rotate by a driving source 38. In the present embodiment, the driving source 38 is a stepping motor. The rotations of an output shaft of the stepping motor are transmitted to the rotary roller 37 via a transmission belt or the like. When the endless loop belt 25 is driven to rotate, the bobbin plates 26 that are attached to the endless loop belt 25 travel in the vertical direction. An endless chain, for example, can be considered as an alternative to the endless loop belt 25. However, the bobbin plates 26 are more stably supported when attached to the endless loop belt 25 as compared with the case where the bobbin plates are attached to the endless chain.

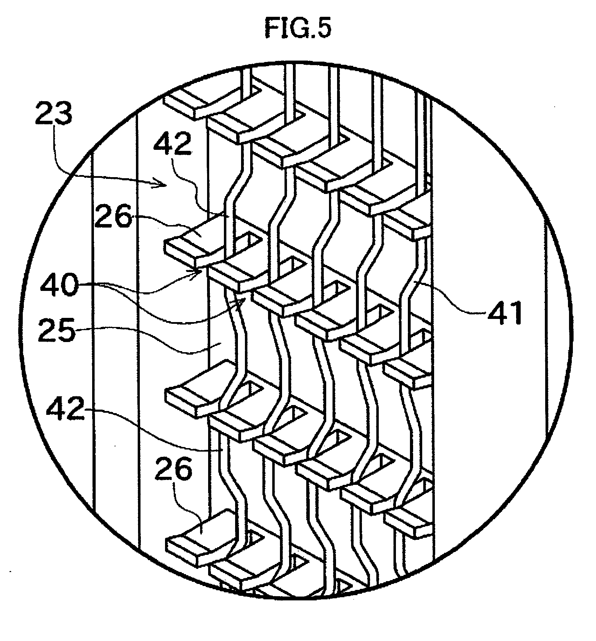

The bobbin plate 26 has a rectangular top surface (as shown in FIG. 5, slits 40 are formed in the rectangular bobbin plate 26; this will be explained in further detail later) so that the yarn supplying bobbin 9 can ride on the bobbin plate 26. The rectangular bobbin plate 26 is attached to the endless loop belt 25 in such a way that a longitudinal direction of the bobbin plate 26 is oriented along a width direction of the endless loop belt 25. A width of the bobbin plate 26 in an orthogonal direction of the bobbin plate 26 is such that two yarn supplying bobbins 9 cannot ride side by side on the bobbin plate 26. With this structure, just one yarn supplying bobbin 9 among the yarn supplying bobbins 9 in the bobbin introduction section 22 can ride on each of the bobbin plates 26, and transported upward, in a perpendicular direction relative to an installation surface of the device by the loop driving of the endless loop belt 25. In this manner, the yarn supplying bobbins 9 are picked up (isolated) one by one from the pile of the yarn supplying bobbins 9 in the bobbin introduction section 22.

In the cop delivering device disclosed in Japanese Patent Application Laid-open No. H8-337317, for example, the cops are isolated by using the feeder bowl. This structure requires more space in the horizontal direction. On the other hand, the isolation section 23 of the bobbin delivering device 12 according to the present embodiment isolates the yarn supplying bobbins 9 by transporting the yarn supplying bobbins 9 vertically and hence requires less space in the horizontal direction. Consequently, the bobbin delivering device 12 is more compact compared with the conventional structure.

Furthermore, in the cop delivering device disclosed in Japanese Patent Application Laid-open No. H8-337317, the cops are isolated while dropping the cops from a height. Therefore, the position where the unloading device unloads the bobbins has to be at a position that is elevated above the installation surface, leading to less than ideal visibility and operability. On the other hand, in the bobbin delivering device 12 according to the present embodiment, the yarn supplying bobbins 9 are isolated by transporting them upward; therefore the position from where the yarn supplying bobbins 9 are introduced can be set lower, leading to greatly improved visibility and operability.

The yarn supplying bobbin 9 that is transported upward by the isolation section 23 is supplied to the tray placement section 24. The tray placement section 24 makes a distinction of an unwinding end and a supporting end of the yarn supplying bobbin 9 received from the isolation section 23, rotates the yarn supplying bobbin 9 so that the supporting end faces downward, and drops the yarn supplying bobbin 9 from a bobbin chute 27. The transporting tray 21 is waiting below the bobbin chute 27 to receive the yarn supplying bobbin 9 from the bobbin chute 27. Such tray placement sections are known in the art, for example, one is disclosed in Japanese Patent Application Laid-open No. H8-169525, and therefore, a detailed explanation of the tray placement section is omitted herefrom.

As described above, in the bobbin delivering device 12 according to the present embodiment, the yarn supplying bobbins 9 are picked up by scooping them up one by one from the pile of the yarn supplying bobbins 9 in the bobbin introduction section 22 by a scooping end (the end opposite to the end that is attached to the endless loop belt 25) of the bobbin plate 26. The isolated yarn supplying bobbin 9 is then transported to and placed on the transporting tray 21.

A situation has been explained above where a single yarn supplying bobbin 9 is carried on each of the bobbin plates 26. In actuality, it is possible that two or more yarn supplying bobbins 9 are riding on the bobbin plate 26 one on top of another.

In view of this, the bobbin delivering device 12 according to the present embodiment includes contact members 41 that can make contact with the yarn supplying bobbin 9 that is being transported on the bobbin plate 26. The contact member 41 is a metal wire arranged along the transport direction (vertical direction) of the yarn supplying bobbin 9 by the bobbin plates 26. As shown in FIG. 5, the bobbin plates 26 have the slits 40 along the width direction, and the contact members 41 pass through the slits 40. A plurality of the slits 40 is formed in the bobbin plates 26 in the longitudinal direction of the bobbin plates 26, and the contact members 41 are arranged in each of the slits 40. With this structure, the contact members 41 come into contact with the yarn supplying bobbin 9 that is riding on the bobbin plate 26 from the side of the endless loop belt 25 (from the opposite direction of the scooping end of the bobbin plate 26) in the width direction of the bobbin plate 26.

The contact member 41 has a bend in a plane orthogonal to the longitudinal direction of the bobbin plate 26 (parallel to the paper on which FIG. 4 is printed). More specifically, the contact member 41 has a pushing portion 42 that is convex toward the scooping end of the bobbin plate 26. Due to this structure, when the yarn supplying bobbins 9, which are being transported one above the other, reach the position of the pushing portion 42, the contact member 41 push the yarn supplying bobbins 9 toward the scooping end of the bobbin plate 26.

For example, as shown in FIG. 4, when the bobbin plate 26 carrying two yarn supplying bobbins 9 one on top of another reaches the position of the pushing portion 42, the contact members 41 push the yarn supplying bobbins 9, causing the yarn supplying bobbins 9 to lose their balance. Consequently, the yarn supplying bobbin 9 that is riding on the top falls off the scooping end of the bobbin plate 26. In this manner, the extra yarn supplying bobbin 9 riding on the bobbin plate 26 is dropped from the bobbin plate 26 with a simple structure of the contact member 41 including the pushing portion 42 along the transport direction of the yarn supplying bobbin 9. That is, the number of the yarn supplying bobbins 9 that can be carried on one bobbin plate 26 can be restricted to one, and therefore, the yarn supplying bobbins 9 can be isolated without fail. Meanwhile, each of the contact members 41 has a plurality of the pushing portions 42 in the direction in which the yarn supplying bobbin 9 is transported by the bobbin plate 26 (at four places in the present embodiment). With this structure, loss of balance of the yarn supplying bobbins 9 can be realized at a plurality of places, and therefore, the yarn supplying bobbins 9 can be isolated more definitively.

If the yarn supplying bobbins 9 introduced into the bobbin introduction section 22 are supplied to the isolation section 23 all at once, the isolation section 23 may have difficulty in picking up the yarn supplying bobbins 9 one by one. In view of this, the bobbin delivering device 12 is configured so that a smaller number of the yarn supplying bobbins 9 are divide from the pile of the yarn supplying bobbins 9 introduced into the bobbin introduction section 22 and the smaller number of the yarn supplying bobbins 9 are supplied to the isolation section 23.

Specifically, as shown in FIGS. 1, 2, and 6, the bobbin introduction section 22 includes a reservoir member 28, a fixed-number transporting member 29, and a guiding member 30. The reservoir member 28 and the guiding member 30 communicate with each other. The fixed-number transporting member 29 is arranged between the reservoir member 28 and the guiding member 30.

The yarn supplying bobbins 9 transported from the spinning machine or the like in the container 8 are introduced into the reservoir member 28. As shown in FIG. 1, a first bottom surface 43 of the reservoir member 28 is inclined downward toward the guiding member 30. Such inclination facilitates the yarn supplying bobbins 9 in the reservoir member 28 to slide down toward the guiding member 30.

The fixed-number transporting member 29 includes a pivoting member 31. As shown in FIG. 1, the pivoting member 31 holds back the yarn supplying bobbins 9 so that the yarn supplying bobbins 9 do not rush into the guiding member 30 from the reservoir member 28. In this manner, because the yarn supplying bobbins 9 are temporarily held in the reservoir member 28, rushing of a large number of the yarn supplying bobbins 9 all at once into the guiding member 30 can be prevented.

A structure of the fixed-number transporting member 29 is explained in detail below.

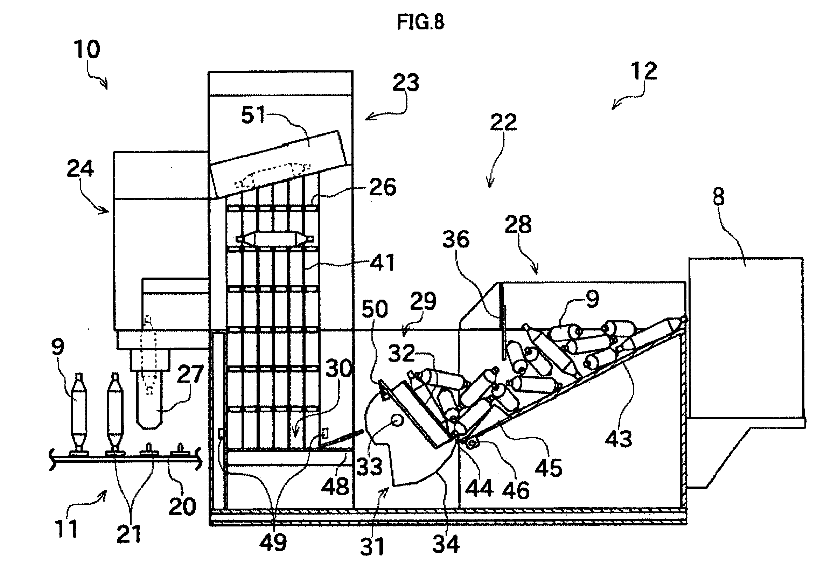

The pivoting member 31 is pivotable about a pivot shaft 33. The pivoting member 31 has a transporting plate 32 arranged on a top surface thereof. The fixed-number transporting member 29 includes a not shown driving source (for example, a pneumatic cylinder) for driving the pivoting member 31 to pivot. The driving source drives the pivoting member 31 to pivot and assume a posture in which an upper surface of the transporting plate 32 faces the guiding member 30 (the state shown in FIG. 1) or a posture in which the upper surface of the transporting plate 32 faces the reservoir member 28 (the state shown in FIG. 8).

When the pivoting member 31 assumes the posture in which the upper surface of the transporting plate 32 faces the guiding member 30 (the state shown in FIG. 1), the yarn supplying bobbins 9 in the reservoir member 28 are held back from rushing into the guiding member 30. More specifically, the pivoting member 31 includes a flow stopping wall 34. The flow stopping wall 34 extends downward from near an end of the transporting plate 32 toward the reservoir member 28, and is a part of an outer periphery of a cylinder that is coaxial with the pivot shaft 33. Meanwhile, the flow stopping wall 34 faces the reservoir member 28. In this structure, as the pivoting member 31 pivots about the pivot shaft 33, the flow stopping wall 34 appears or disappears. The yarn supplying bobbins 9 that would have otherwise rushed into the guiding member 30 due to the inclination of the first bottom surface 43 of the reservoir member 28 are held back when these yarn supplying bobbins 9 comes into contact with the appeared flow stopping wall 34.

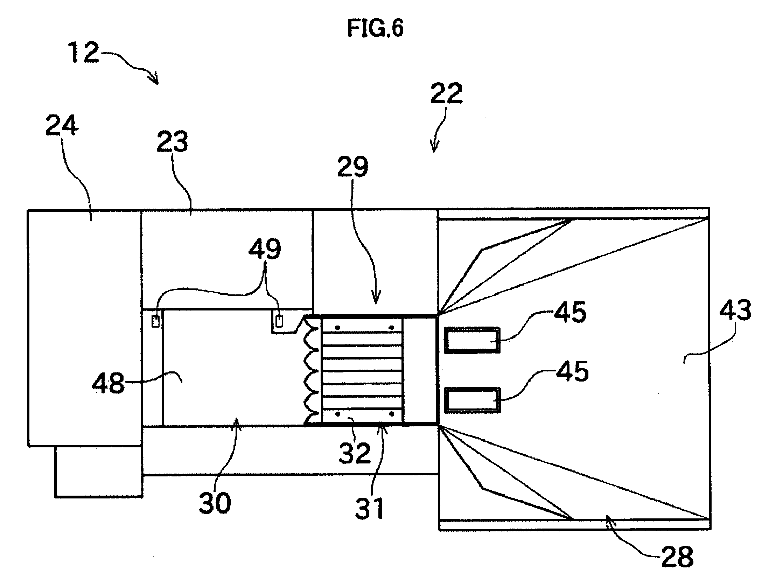

The reservoir member 28 includes a height limiting plate 36 that limits a height of a path of the yarn supplying bobbins 9 from the reservoir member 28 to the fixed-number transporting member 29. The height of the path is adjusted appropriately with the height limiting plate 36 so that the yarn supplying bobbins 9 in the reservoir member 28 do not pass over the flow stopping wall 34 and rush into the guiding member 30. Furthermore, as shown in FIG. 6, the reservoir member 28 is formed such that a width of the path of the yarn supplying bobbins 9 toward the fixed-number transporting member 29 (that is, a width in the direction of the depth of the device) gradually narrows. Because the path of the yarn supplying bobbins 9 toward the fixed-number transporting member 29 gradually narrows, a relatively small flow stopping wall 34 is sufficient to hold back a large number of the yarn supplying bobbins 9 in the reservoir member 28. Consequently, a compact pivoting member 31 is realized.

How the yarn supplying bobbins 9 in the reservoir member 28 are transported by the fixed-number transporting member 29 to the guiding member 30 is explained below. At the time of transporting the yarn supplying bobbins 9 toward the guiding member 30, the fixed-number transporting member 29 causes the pivoting member 31 to pivot so that the upper surface of the transporting plate 32 faces the reservoir member 28 (as shown in FIG. 8). Consequently, the yarn supplying bobbins 9 that were held back by the flow stopping wall 34 come into contact with the upper surface of the transporting plate 32.

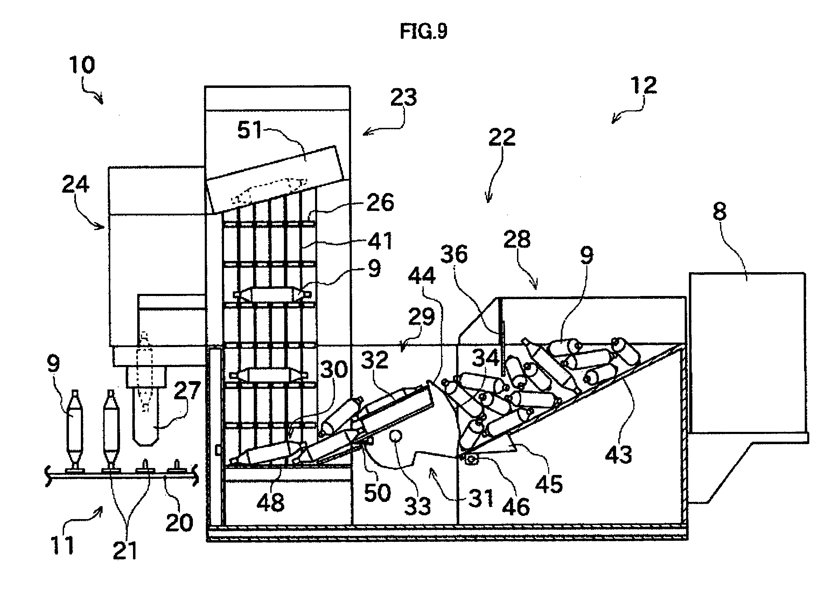

In this state, the pivoting member 31 of the fixed-number transporting member 29 is pivoted again so that the upper surface of the transporting plate 32 now faces the guiding member 30 (as shown in FIG. 9). Consequently, because the pivoting member 31 pivots with a certain number of the yarn supplying bobbins 9 riding on the transporting plate 32, only the yarn supplying bobbins 9 riding on the transporting plate 32 are delivered to the guiding member 30. Consequently, with a simple structure that involves merely pivoting the pivoting member 31, a small predetermined number of the yarn supplying bobbins 9 can be separated from a large number of the yarn supplying bobbins 9 present in the reservoir member 28 and transported to the guiding member 30.

Furthermore, the pivoting member 31 has a projecting portion 44 at the end of the transporting plate 32 toward the reservoir member 28. This projecting portion 44 projects above the upper surface of the transporting plate 32 and prevents the yarn supplying bobbins 9 riding on the upper surface of the transporting plate 32 from sliding back into the reservoir member 28. Therefore, when transporting the yarn supplying bobbins 9 by causing the pivoting member 31 to pivot, the yarn supplying bobbins 9 riding on the transporting plate 32 are definitively dispatched to the guiding member 30. As a result, the number of the yarn supplying bobbins 9 transported by the fixed-number transporting member 29 can be stabilized.

As mentioned above, because of the narrowed path of flow of the yarn supplying bobbins 9 from the reservoir member 28 to the fixed-number transporting member 29, the large number of the yarn supplying bobbins 9 in the reservoir member 28 can be easily separated into a smaller number.

However, because of the narrowed path of flow of the yarn supplying bobbins 9 from the reservoir member 28 to the fixed-number transporting member 29, there is a possibility that the yarn supplying bobbins 9 may get jammed in the path. In view of this, a bobbin jam-breaking member 45 is arranged on the first bottom surface 43 of the reservoir member 28 below the height limiting plate 36. The bobbin jam-breaking member 45 pivots about a pivot shaft 46 to assume a posture of being at the same level as that of the upper surface of the first bottom surface 43 (the state shown in FIGS. 1 and 9) or a posture of jutting out above the first bottom surface 43 (the state shown in FIG. 8). The reservoir member 28 includes a not shown driving source (for example, a pneumatic cylinder) for driving the bobbin jam-breaking member 45 to pivot.

The pivot shaft 46 of the bobbin jam-breaking member 45 is arranged toward a lower end of the bobbin jam-breaking member 45. Due to this structure, when the bobbin jam-breaking member 45 is pivoted about the pivot shaft 46 and made to jut out above the first bottom surface 43, an upper surface of the bobbin jam-breaking member 45 imparts an impact that pushes the yarn supplying bobbins 9 in the reservoir member 28 toward a bottom end of the inclined first bottom surface 43 (that is, toward the fixed-number transporting member 29). Consequently, even if there is jamming of the yarn supplying bobbins 9 that are headed toward the fixed-number transporting member 29, the jamming can be broken up.

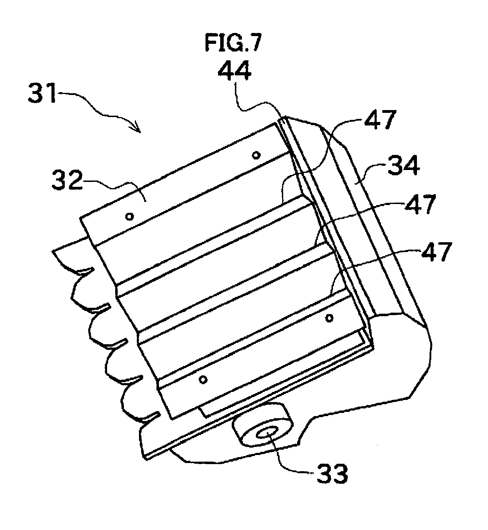

As shown in FIG. 7, the transporting plate 32 is folded to have accordion-like folds. A plurality of parallel wave-shaped furrows 47 is formed on the upper surface of the transporting plate 32 by the folding. Due to this structure, the yarn supplying bobbins 9 riding on the transporting plate 32 are caught in the furrows 47 with a longitudinal direction thereof in alignment with a longitudinal direction of the furrows 47. Therefore, the orientation of the yarn supplying bobbins 9 in the longitudinal direction can be easily aligned by virtue of the parallel furrows 47 on the upper surface of the transporting plate 32. Meanwhile, even if there is only a single furrow 47, the orientation of the yarn supplying bobbins 9 can be aligned.

As explained above, in the structure according to the present embodiment, the large number of the yarn supplying bobbins 9 can be divided into a predetermined smaller number of the yarn supplying bobbins 9 and only the smaller number of the yarn supplying bobbins 9 can be transported to the guiding member 30. Therefore, because no conveyor needs to be arranged horizontally to divide the pile of cops as disclosed in Japanese Patent Application Laid-open No. H8-337317, the installation space of the bobbin delivering device 12 can be made more compact.

The guiding member 30 is explained below. The guiding member 30 guides the yarn supplying bobbins 9 that are transported by the fixed-number transporting member 29 to the isolation section 23.

More specifically, a side wall of the guiding member 30 on the depth side of the device (a side wall on an upper side in FIG. 6) is open, allowing the guiding member 30 to communicate with the conveyor (a space in which the endless loop belt 25 and the bobbin plate 26 are arranged) of the isolation section 23. A second bottom surface 48 of the guiding member 30 is inclined downward toward the isolation section 23. The inclination facilitates the yarn supplying bobbins 9 transported by the fixed-number transporting member 29 to the guiding member 30 to crowd toward the isolation section 23. Accordingly, the second bottom surface 48 of the guiding member 30 can also be called a bobbin gathering member.

The yarn supplying bobbins 9 crowding toward the isolation section 23 due to the inclination of the second bottom surface 48 are picked up one by one by the bobbin plates 26 of the isolation section 23. In this manner, the yarn supplying bobbins 9 are transported upward, in a perpendicular direction relative to the installation surface of the device. That is, the yarn supplying bobbins 9 are isolated.

The guiding member 30 includes a bobbin sensor (detecting section) 49. Specifically, the bobbin sensor 49 is a non-contact type sensor that detects presence or absence of the yarn supplying bobbins 9 in the side wall portion (that opens to the conveyor of the isolation section 23) of the guiding member 30 that opens into the isolation section 23. The pivoting member 31 of the bobbin delivering device 12 is made to pivot based on an output of the bobbin sensor 49.

That is, when the bobbin sensor 49 detects the presence of the yarn supplying bobbins 9, it means that the guiding member 30 already contains the yarn supplying bobbins 9, so that the pivoting member 31 is controlled to assume the posture in which the upper surface of the transporting plate 32 faces the guiding member 30 whereby the yarn supplying bobbins 9 in the reservoir member 28 are prevented from rushing into the guiding member 30. On the other hand, when the bobbin sensor 49 detects absence of the yarn supplying bobbins 9, it means that there is no yarn supplying bobbin 9 in the guiding member 30, so that the predetermined number of the yarn supplying bobbins 9 is transported by the fixed-number transporting member 29 to the guiding member 30. More specifically, when the bobbin sensor 49 detects absence of the yarn supplying bobbins 9, the pivoting member 31 is pivoted so that the upper surface of the transporting plate 32 faces the reservoir member 28 to allow the yarn supplying bobbins 9 to ride on the transporting plate 32 after which once again the pivoting member 31 is pivoted so that the upper surface of the transporting plate 32 faces the guiding member 30. In this manner, the predetermined number of the yarn supplying bobbins 9 is transported to the guiding member 30.

As explained above, the number of the yarn supplying bobbins 9 inside the guiding member 30 can be always maintained to be within a predetermined range by controlling the driving of the pivoting member 31 based on the output of the bobbin sensor 49 arranged inside the guiding member 30. Consequently, the yarn supplying bobbins 9 in the guiding member 30 can be properly picked up by the isolation section 23.

The furrows 47 on the upper surface of the transporting plate 32 are formed such that their longitudinal direction is parallel to a longitudinal direction of the bobbin plate 26. Therefore, when the yarn supplying bobbins 9 riding on the transporting plate 32 are being transported to the guiding member 30, the yarn supplying bobbins 9 are oriented such that their longitudinal directions are parallel to the longitudinal direction of the bobbin plates 26 due to the yarn supplying bobbins 9 being caught in the furrows 47. Therefore, when the yarn supplying bobbins 9 crowd toward the isolation section 23 due to the inclination of the second bottom surface 48 of the guiding member 30, there is a higher possibility that the longitudinal directions of the yarn supplying bobbins 9 are aligned with the longitudinal direction of the bobbin plates 26. Consequently, the yarn supplying bobbins 9 in the guiding member 30 can be easily picked up with the bobbin plates 26.

All the yarn supplying bobbins 9 may not be guided into the isolation section 23 with the longitudinal directions thereof in alignment with the longitudinal direction of the bobbin plate 26. Those yarn supplying bobbins 9 with their longitudinal directions tilted relative to the longitudinal direction of the bobbin plate 26 may not properly ride on the bobbin plate 26 and fall off the bobbin plate 26. However, because the orientation of the yarn supplying bobbin 9 changes when the yarn supplying bobbin 9 falls, there is a possibility that the yarn supplying bobbin 9 may ride on the bobbin plate 26 when the yarn supplying bobbin 9 crowds once again toward the isolation section 23 due to the inclination of the second bottom surface 48 of the guiding member 30. In this manner, the yarn supplying bobbins 9 that fall off without riding the bobbin plate 26 keep crowding again and again toward the isolation section 23 due to the inclination of the second bottom surface 48 of the guiding member 30. Because the orientation of the yarn supplying bobbin 9 changes at every fall, eventually the yarn supplying bobbin 9 does ride on the bobbin plate 26.

As explained above, the bobbin plates 26 cause the orientation of the yarn supplying bobbins 9 in the guiding member 30 to keep changing. That is, the bobbin plates 26 stir up the yarn supplying bobbins 9 in the guiding member 30. However, due to such stirring, the yarn on the yarn supplying bobbins 9 may come out (causing webbing) and easily get entangled with the yarns of the other yarn supplying bobbins 9. If the yarns of the yarn supplying bobbins 9 get entangled with each other, the isolation section 23 cannot properly isolate the yarn supplying bobbins 9. In view of this, in the present embodiment, as shown in FIG. 1, a cutter 50 for cutting the yarn is arranged at the end of the pivoting member 31 toward the guiding member 30. The cutter 50 is a scissor-like member and is driven by a not shown driving source to cut the yarn coming out of the yarn supplying bobbin 9. The cutter 50 cuts any yarn that is coming out of the yarn supplying bobbin 9 before the yarn supplying bobbins 9 are transported from the fixed-number transporting member 29 to the guiding member 30. More specifically, to prevent the entangling of the yarns of the yarn supplying bobbins 9, the yarns that have come out of the yarn supplying bobbins 9 are cut at the end of the furrows 47 by the cutter 50 when the yarn supplying bobbins 9 move from the pivoting member 31 toward the guiding member 30. The cutter 50 is arranged for each of the furrows 47. Therefore, the yarns that have come out of the yarn supplying bobbins 9 caught and transported in the furrows 47 are guided toward the cutter 50. The yarns coming out of the yarn supplying bobbins 9 can be effectively cut by arranging the cutter 50 in this manner. Therefore, even if the yarn supplying bobbins 9 are stirred up by the bobbin plates 26, entangling of the yarns can be prevented, and the yarn supplying bobbins 9 can be isolated properly.

Moreover, not necessarily all the bobbin plates 26 carry the yarn supplying bobbin 9 (that is, some bobbin plates 26 can remain empty). This can lead to a situation where no yarn supplying bobbin 9 is delivered to the tray placement section 24 from the isolation section 23. When no yarn supplying bobbin 9 is delivered to the transporting tray 21 from the tray placement section 24, the corresponding tray placement section 24 will unnecessarily lie idle. In view of this, in the present embodiment, a bobbin buffer member (stocking member) 51 that temporarily stocks the yarn supplying bobbin 9 is arranged between the isolation section 23 and the tray placement section 24. The yarn supplying bobbin 9 stocked in the bobbin buffer member 51 is delivered to the tray placement section 24 when no yarn supplying bobbin 9 is riding on the bobbin plate 26. With this structure, the tray placement section 24 can be prevented from lying idle, and an efficiency of the device can be improved.

As explained above, the bobbin delivering device 12 according to the present embodiment includes the bobbin introduction section 22 and the isolation section 23. The yarn supplying bobbins 9 with the yarn wound thereon by the spinning machine are introduced into the bobbin introduction section 22 in pile. The isolation section 23 isolates the yarn supplying bobbins 9 from the pile introduced into the bobbin introduction section 22. The bobbin introduction section 22 includes the reservoir member 28, the guiding member 30, and the fixed-number transporting member 29. The reservoir member 28 temporarily holds the yarn supplying bobbins 9. The guiding member 30 guides the yarn supplying bobbins 9 up to the isolation section 23. The fixed-number transporting member 29 is arranged between the reservoir member 28 and the guiding member 30. The fixed-number transporting member 29 includes the pivoting member 31 that pivots to allow only the predetermined smaller number of the yarn supplying bobbins 9 from among the yarn supplying bobbins 9 in the reservoir member 28 to be transported to the guiding member 30.

In this manner, the predetermined smaller number of the yarn supplying bobbins 9 from among the yarn supplying bobbins 9 can be transported to the isolation section 23 with a simple structure that involves merely pivoting the pivoting member 31. Consequently, space-saving can be realized compared with the conventional structure in which a conveyor is used to transport a fixed number of the yarn supplying bobbins 9.

Furthermore, the bobbin sensor 49 that detects presence or absence of the yarn supplying bobbins 9 in the guiding member 30 is arranged inside the guiding member 30, and the pivoting member 31 is pivoted based on an output of the bobbin sensor 49.

By driving the pivoting member 31 based on the presence or absence of the yarn supplying bobbins 9 in the guiding member 30, the number of the yarn supplying bobbins 9 in the guiding member 30 can always be maintained to be within a predetermined range. Therefore, the yarn supplying bobbins 9 can be supplied properly to the isolation section 23.

The bobbin delivering device 12 according to the present embodiment furthermore has the following structure. That is, the pivoting member 31 includes the transporting plate 32 on the upper surface thereof for carrying the yarn supplying bobbins 9, and the flow stopping wall 34 that appears and disappears. The pivoting member 31 pivots with the yarn supplying bobbins 9 riding on the transporting plate 32 to dispatch the predetermined number of the yarn supplying bobbins 9 from the reservoir member 28 to the guiding member 30 as well as prevents the yarn supplying bobbins 9 from rushing from the reservoir member 28 to the guiding member 30 with the flow stopping wall 34.

That is, only the yarn supplying bobbins 9 riding on the transporting plate 32 are dispatched to the guiding member 30. Because the fixed number of the yarn supplying bobbins 9 can be transported with a simple mechanism described above, there is no need for complex and space-occupying devices such as the conveyor.

Furthermore, in the bobbin delivering device 12 according to the present embodiment, the furrows 47 that are parallel and oriented in the same direction are formed on the upper surface of the transporting plate 32.

The yarn supplying bobbins 9 are caught in the furrows 47 on the upper surface of the transporting plate 32, due to which the yarn supplying bobbins 9 are aligned in the longitudinal direction of the furrows 47. Consequently, the yarn supplying bobbins 9 are aligned when being transported from the fixed-number transporting member 29 to the guiding member 30.

Furthermore, in the bobbin delivering device 12 according to the present embodiment, the cutter 50 that cuts the yarn that has come out from the yarn supplying bobbin 9 is arranged at one end of the transporting plate 32.

Due to this structure, webbing of the yarn supplying bobbins 9 can be prevented, and therefore, the yarns of the yarn supplying bobbins 9 can be prevented from getting entangled with each other in the guiding member 30 or in the isolation section 23.

The bobbin delivering device 12 according to the present embodiment furthermore has the following structure. That is, the reservoir member 28 includes the first bottom surface 43 that is inclined toward the fixed-number transporting member 29. In one portion of the first bottom surface 43 is arranged the bobbin jam-breaking member 45 that is driven to jut out above or be substantially at the same level with the first bottom surface 43.

When a large number of the yarn supplying bobbins 9 are introduced into the reservoir member 28, there is a possibility that the yarn supplying bobbins 9 may get jammed in the path that leads to the fixed-number transporting member 29. In view of this, the bobbin jam-breaking member 45 that juts out above the first bottom surface 43 is provided. When driven, the bobbin jam-breaking member 45 imparts an impact to the yarn supplying bobbins 9 and breaks up the jammed yarn supplying bobbins 9.

In the bobbin delivering device 12 according to the present embodiment, the isolation section 23 picks up, transports, and isolates the yarn supplying bobbins 9 guided by the guiding member 30 in a perpendicular direction relative to the installation surface of the guiding member 30.

By having such a structure in which the yarn supplying bobbins 9 are transported vertically, the installation space can be made more compact compared with the installation space required for the structure that transports the yarn supplying bobbins 9 horizontally.

The bobbin delivering device 12 according to the present embodiment furthermore has the following structure. That is, the isolation section 23 is located at a place where the isolation section 23 can pick up the yarn supplying bobbins 9 in the guiding member 30 from one side of the guiding member 30. The guiding member 30 includes the second bottom surface 48 that facilitates the yarn supplying bobbins 9 in the guiding member 30 to crowd at a position where the isolation section 23 can pick up the yarn supplying bobbins 9.

Therefore, when the yarn supplying bobbins 9 in the guiding member 30 crowd toward the isolation section 23, the yarn supplying bobbins 9 can be properly picked up by the isolation section 23.

In the bobbin delivering device 12 according to the present embodiment, the second bottom surface 48 is inclined toward the isolation section 23.

Therefore, with a simple structure, the yarn supplying bobbins 9 can be made to crowd toward the isolation section 23. Furthermore, due to the inclination of the second bottom surface 48, those yarn supplying bobbins 9 that miss being picked up by the isolation section 23 keep crowding toward the isolation section 23. Therefore, because with every fall of the yarn supplying bobbins 9 the orientation of the yarn supplying bobbin 9 changes, eventually when the orientation is right, the yarn supplying bobbin 9 is picked up by the isolation section 23.

The bobbin delivering device 12 according to the present embodiment furthermore has the following structure. That is, the bobbin delivering device 12 includes the tray placement section 24 that places the yarn supplying bobbin 9 isolated by the isolation section 23 on the transporting tray 21. Arranged between the isolation section 23 and the tray placement section 24 is the bobbin buffer member 51 that temporarily stores therein the isolated yarn supplying bobbins 9.

By arranging the bobbin buffer member 51 immediately before the tray placement section 24, the yarn supplying bobbin 9 temporarily stored in the bobbin buffer member 51 can be supplied to the tray placement section 24 even if there is a delay in the isolation process by the isolation section 23 (due to the yarn supplying bobbin 9 not riding properly on the bobbin plate 26, etc.). Therefore, the tray placement section 24 can be prevented from lying idle, and the efficiency of the tray placement section 24 can be improved.

The bobbin delivering device 12 according to the present embodiment furthermore has the following structure. That is, the isolation section 23 includes the bobbin plate 26 that has a rectangular shape so that the yarn supplying bobbin 9 can ride on the bobbin plate 26. The bobbin plate 26 is driven in a perpendicular direction relative to the installation surface of the guiding member 30.

With this structure, the yarn supplying bobbins 9 in the guiding member 30 ride individually on each of the bobbin plates 26, and transported and isolated in a vertical direction.

The bobbin delivering device 12 according to the present embodiment furthermore has the following structure. That is, the bobbin delivering device 12 includes the contact member 41 that comes into contact with the yarn supplying bobbin 9 riding on the bobbin plate 26 from the side of the yarn supplying bobbin 9 that is opposite to the scooping end of the bobbin plate 26. The contact member 41 is arranged along the direction in which the yarn supplying bobbin 9 is transported by the bobbin plate 26, and has the pushing portion 42 that is convex toward the scooping end of the bobbin plate 26.

With this structure, when the yarn supplying bobbin 9 riding on the bobbin plate 26 reaches the position where the pushing portion 42 is located, the contact member 41 pushes the yarn supplying bobbin 9 toward the scooping end of the bobbin plate 26. This action causes the yarn supplying bobbins 9 to lose their balance, and, for example, when plural yarn supplying bobbins 9 are riding one above another, the extra yarn supplying bobbins 9 fall off the bobbin plate 26 due to the loss of balance imparted by the pushing portion 42.

The automatic winder 10 according to the present embodiment includes the bobbin delivering device 12 described above, a plurality of the winder units, each of which unwinds the yarn from the yarn supplying bobbin 9 isolated by the bobbin delivering device 12 and rewinds the yarn to produce the package, and the bobbin transporting device 11 that transports the yarn supplying bobbin 9 isolated by the bobbin delivering device 12 up to each of the winder units.

Because the automatic winder 10 includes the bobbin delivering device 12 according to an embodiment of the present invention, effects such as space-saving and reduction in the workload on the operator can be achieved.

Although the preferable embodiments of the invention have been described above, the embodiments can be modified as explained below.

The isolation section need not be limited to the conveyor that transports the yarn supplying bobbin 9 vertically as described in the present embodiment. The parts feeder that is mentioned in Japanese Patent Application Laid-open No. H8-337317, for example, can be used as the isolation section.

The detecting section need not be limited to the non-contact type bobbin sensor 49 but can be a contact type sensor that detects presence or absence of the yarn supplying bobbins 9 in the guiding member 30.

In the present embodiment, the pivoting member 31 is maintained in the posture in which the upper surface of the transporting plate 32 faces the guiding member 30 when the bobbin sensor 49 detects the presence of the yarn supplying bobbins 9. Alternatively, the pivoting member 31 can be maintained in the posture in which the transporting plate 32 with the yarn supplying bobbins 9 riding thereon is held substantially horizontal. By keeping the yarn supplying bobbins 9 ready on the pivoting member 31 in this manner, the yarn supplying bobbins 9 can be promptly transported to the guiding member 30 when the bobbin sensor 49 detects absence of the yarn supplying bobbins 9 in the guiding member 30.

The bobbin gathering member need not be limited to the inclined bottom surface of the guiding member 30 as described in the present embodiment. A pushing member that pushes the yarn supplying bobbin 9 toward the isolation section 23 can be provided to cause the yarn supplying bobbins 9 to crowd toward the isolation section 23.

The contact member is not limited to the metal wire used in the present embodiment but can be a plate-shaped member.

The bobbin delivering device 12 can be used for delivering bobbins in other types of spinning machines apart from the automatic winder.

A bobbin delivering device according to an aspect of the present invention has the following structure. That is, the bobbin delivering device includes a bobbin introduction section and an isolation section. A pile of yarn supplying bobbins with yarns wound thereon by a spinning machine is introduced into the bobbin introduction section. The isolation section isolates the yarn supplying bobbins from the pile of the yarn supplying bobbins introduced into the bobbin introduction section. The bobbin introduction section includes a reservoir member, a guiding member, and a fixed-number transporting member. The reservoir member temporarily holds the pile of the yarn supplying bobbins. The guiding member guides the yarn supplying bobbins up to the isolation section. The fixed-number transporting member is arranged between the reservoir member and the guiding member. The fixed-number transporting member includes a pivoting member that pivots to allow only a predetermined number of the yarn supplying bobbins from the pile of the yarn supplying bobbins in the reservoir member to be transported to the guiding member.

In the above structure, with a simple structure involving a mere pivoting of the pivoting member, the pile of the yarn supplying bobbins can be divided into a predetermined smaller number of the yarn supplying bobbins and transported to the isolation section. Consequently, space-saving can be realized compared with the conventional structure in which a conveyor is used to transport a fixed number of the yarn supplying bobbins.

In the bobbin delivering device described above, it is preferable that the guiding member includes a detecting section that detects presence or absence of the yarn supplying bobbins in the guiding member, and the pivoting member be made to pivot based on a detection result obtained at the detecting section.

In the above structure, by driving the pivoting member based on whether the yarn supplying bobbin is present or absent in the guiding member, the number of the yarn supplying bobbins in the guiding member can be always maintained to be within a predetermined range. Therefore, the yarn supplying bobbins can be delivered properly to the isolation section.

It is preferable that the bobbin delivering devices described above has the following structure. That is, the pivoting member includes a transporting plate for carrying the yarn supplying bobbin on an upper surface thereof and a flow stopping wall that can appear or disappear. The pivoting member pivots with the yarn supplying bobbin riding on the transporting plate, to dispatch the predetermined number of the yarn supplying bobbins from the reservoir member to the guiding member as well as prevents the yarn supplying bobbins from rushing from the reservoir member to the guiding member with the flow stopping wall.

In the above structure, only the yarn supplying bobbins that are riding on the transporting plate are dispatched to the guiding member. Because a fixed number of the yarn supplying bobbins can be transported with a simple structure described above, there is no need for complex and space-occupying devices such as a conveyor.

It is preferable that on the upper surface of the transporting plate are formed a plurality of parallel furrows that is oriented in the same direction.

The yarn supplying bobbins riding on the upper surface of the transporting plate are caught in the furrows due to which the yarn supplying bobbins are aligned in a longitudinal direction of the furrows. Consequently, the yarn supplying bobbins are aligned in orientation when being delivered from the fixed-number transporting member to the guiding member.

It is preferable that the bobbin delivering device described above includes at one end of the transporting plate a cutter that cuts the yarn coming out of the yarn supplying bobbin.

With the above structure, webbing of the yarn supplying bobbins can be prevented, and therefore, the yarns of the yarn supplying bobbins can be prevented from getting entangled with each other in the guiding member or in the isolation section.

It is preferable that the bobbin delivering device described above has the following structure. That is, the reservoir member includes a first bottom surface that is inclined toward the fixed-number transporting member. In one portion of the first bottom surface is provided a bobbin jam-breaking member that is driven to jut out above or be substantially at the same level with the first bottom surface.

When a large number of the yarn supplying bobbins is deposited into the reservoir member, the yarn supplying bobbins may get jammed in the path to the fixed-number transporting member. In view of this, the bobbin jam-breaking member that juts out above the first bottom surface is provided. When driven, the bobbin jam-breaking member imparts an impact to the yarn supplying bobbins and breaks up the jammed yarn supplying bobbins.

In the bobbin delivering device described above, it is preferable that the yarn supplying bobbins guided by the guiding member be picked up, transported, and isolated by the isolation section in a perpendicular direction relative to an installation surface of the guiding member.

By such a structure in which the yarn supplying bobbins are transported vertically, an installation space can be made more compact compared with the installation space required for a structure in which the bobbins are transported horizontally.

It is preferable that the bobbin delivering device described above has the following structure. That is, the isolation section is located at a place where the isolation section can pick up the yarn supplying bobbins that are inside the guiding member from one side of the guiding member. The guiding member includes a bobbin gathering member that facilitates the pile of the yarn supplying bobbins in the guiding member to crowd at a position where the isolation section can pick them up.

Therefore, when the yarn supplying bobbins in the guiding member crowd toward the isolation section, the yarn supplying bobbins can be properly picked up by the isolation section.

In the bobbin delivering device described above, it is preferable that the bobbin gathering member be a second bottom surface that is inclined toward the isolation section.

Therefore, with a simple structure, the yarn supplying bobbins can be made to crowd toward the isolation section. Furthermore, due to the inclination of the bobbin gathering member, those yarn supplying bobbins that miss being picked up by the isolation section keep crowding toward the isolation section. Therefore, because with every fall of the yarn supplying bobbin the orientation of the yarn supplying bobbin changes, eventually when the orientation is right, the yarn supplying bobbin is picked up by the isolation section.

It is preferable that the bobbin delivering device described above has the following structure. That is, the bobbin delivering device includes a tray placement section that places the yarn supplying bobbin isolated by the isolation section on a transporting tray. Arranged between the isolation section and the tray placement section is a stocking member that temporarily stocks the isolated yarn supplying bobbins.

By arranging the stocking member (buffer region) immediately before the tray placement section, the bobbin held in the stocking member can be delivered to the tray placement section even if there is a delay in the isolation process by the isolation section (due to the bobbin not getting placed easily on a bobbin receiving member, etc.). Therefore, the tray placement section can be prevented from being lying idle, and the efficiency of the tray placement section can be improved.

It is preferable that the bobbin delivering device described above has the following structure. That is, the isolation section includes a bobbin receiving member having a rectangular shape so that the yarn supplying bobbin can ride thereon. The bobbin receiving member is driven in a perpendicular direction relative to the installation surface of the guiding member.

With the above structure, the yarn supplying bobbins in the guiding member are placed individually on each of the bobbin receiving member, and transported and isolated in a vertical direction.

It is preferable that the bobbin delivering device described above has the following structure. That is, the bobbin delivering device includes a contact member that can come into contact with the yarn supplying bobbin riding on the bobbin receiving member at the end of the bobbin that is opposite to the scooping end of the bobbin receiving member. The contact member is arranged along the direction in which the yarn supplying bobbin is transported by the bobbin receiving member, and has a pushing portion that is convex toward the scooping end of the bobbin receiving member.

With the above structure, when the yarn supplying bobbin riding on the bobbin receiving member reaches the position where the pushing portion is located, the contact member pushes the yarn supplying bobbin toward the scooping end of the bobbin receiving member. This action causes the yarn supplying bobbins to lose their balance, and if, for example, plural yarn supplying bobbins are riding on a single bobbin receiving member one on top of another, the extra yarn supplying bobbin falls off the bobbin receiving member due to the loss of balance imparted by the pushing portion.

An automatic winder according to another aspect of the present invention includes the above bobbin delivering device, a plurality of winder units, each of which unwinds a yarn from a yarn supplying bobbin isolated by the bobbin delivering device and rewinds the yarn to produce a package, and a bobbin transporting device that transports the yarn supplying bobbin isolated by the bobbin delivering device up to each of the winder units.

Because the automatic winder includes the bobbin delivering device according to an embodiment of the present invention, it is space-saving and put less workload on the operator.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A bobbin delivering device (12) comprising:
a bobbin introduction section (22) that receives a pile of yarn supplying bobbins with yarns wound thereon; and
an isolation section (23) that isolates the yarn supplying bobbins from the pile of the yarn supplying bobbins introduced into the bobbin introduction section (22), **characterized in that**
the bobbin introduction section (22) includes
a reservoir member (28) with an inclined first bottom surface (42) that temporarily holds the pile of the yarn supplying bobbins,
a guiding member (30) that guides the yarn supplying bobbins up to the isolation section (23) with a bobbin gathering member that facilitates the yarn supplying bobbins in the guiding member (30) to crowd at a position where the isolation section (23) can pick them up, and
a fixed-number transporting member (29) that is arranged between the reservoir member (28) and the guiding member (30), and that includes a pivoting member (31) that pivots to allow only a predetermined number of the yarn supplying bobbins from the pile of the yarn supplying bobbins in the reservoir member (28) to be transported to the guiding member (30), which includes
a transporting plate (3 2) for carrying the yarn supplying bobbin on an upper surface thereof, and
a flow stopping wall (3 4) that can appear or disappear.

2. The bobbin delivering device (1 2) according to Claim 1, **characterized in that**
the guiding member (3 0) includes a detecting section (4 9) that detects presence or absence of the yarn supplying bobbin in the guiding member (30), and
the pivoting member (31) is made to pivot based on a detection result obtained at the detecting section (4 9) .

3. The bobbin delivering device (12) according to Claim 1 or 2, **characterized in that** ,
the pivoting member (31) sends the predetermined number of the yarn supplying bobbins from the reservoir member (28) to the guiding member (30) by pivoting with the yarn supplying bobbins riding on the transporting plate (32), and the flow stopping wall (34) prevents the yarn supplying bobbins from rushing from the reservoir member (28) to the guiding member (30).

4. The bobbin delivering device (1 2) according to Claim 3, **characterized in that** a plurality of furrows (4 7) is formed along one direction on the upper surface of the transporting plate (32).

5. The bobbin delivering device (12) according to Claim 3 or 4, **characterized by** a cutter (5 0) that cuts the yarn coming out of the yarn supplying bobbin, the cutter (5 0) being arranged at one end of the transporting plate (32).

6. The bobbin delivering device (1 2) according to any one of Claims 1 to 5, **characterized in that**
the first bottom surface (4 3) is inclined toward the fixed-number transporting member (29), and
the first bottom surface (4 3) includes in a portion thereof a bobbin jam-breaking member (45) that is driven to jut out above or be substantially at the same level with the first bottom surface (43).

7. The bobbin delivering device (12) according to any one of Claims 1 to 6, **characterized in that** the isolation section (23) picks up, transports, and isolates the yarn supplying bobbins guided by the guiding member (30) in a perpendicular direction relative to an installation surface of the guiding member (30).

8. The bobbin delivering device (1 2) according to any one of Claims 1 to 7, **characterized in that**
the isolation section (2 3) is located at a place where the isolation section (23) can pick up the yarn supplying bobbins in the guiding member (3 0) from one side of the guiding member (30).

9. The bobbin delivering device (12) according to Claim 8, **characterized in that** the bobbin gathering member is a second bottom surface (4 8) that is inclined toward the isolation section (23).

10. The bobbin delivering device (12) according to any one of Claims 1 to 9, **characterized by**
a tray placement section that places the yarn supplying bobbin isolated by the isolation section (2 3) on a transporting tray, and
a stocking member (5 1) that temporarily stocks the isolated yarn supplying bobbin and arranged between the isolation section (2 3) and the tray placement section.

11. The bobbin delivering device (12) according to any one of Claims 1 to 10, **characterized in that**
the isolating member includes a bobbin receiving member (2 6) having a rectangular shape so that the yarn supplying bobbin can ride thereon, and
the bobbin receiving member (2 6) is driven in a perpendicular direction relative to the installation surface of the guiding member (30).

12. The bobbin delivering device (1 2) according to Claim 11, **characterized in that**
the isolation section (23) includes a contact member that can come into contact with the yarn supplying bobbin riding on the bobbin receiving member (26) at an end of the yarn supplying bobbin that is opposite to a scooping end of the bobbin receiving member (26), and
the contact member is arranged along the direction in which the yarn supplying bobbin is transported by the bobbin receiving member (26), and has a pushing portion (42) that is convex toward the scooping end of the bobbin receiving member (26).

13. An automatic winder **characterized by**:
the bobbin delivering device (12) according to any one of Claims 1 to 12;
a plurality of winder units, each of which unwinds a yarn from a yarn supplying bobbin isolated by the bobbin delivering device (1 2) and rewinds the yarn to produce a package; and
a bobbin transporting device (1 1) that transports the yarn supplying bobbin isolated by the bobbin delivering device (1 2) up to each of the winder units.

## Patentansprüche

1. Spulenlieferungsvorrichtung (12) mit:
einem Spuleneinführabschnitt (22), der einen Haufen von Fadenlieferspulen mit darauf aufgespulten Fäden erhält; und
einem Trennabschnitt (23), der die Fadenzuführspulen aus dem Haufen von Fadenzuführspulen, die in den Spuleneinführabschnitt (22) eingeführt worden sind, trennt,
**dadurch gekennzeichnet,**
**dass** der Spuleneinführabschnitt (22) Folgendes umfasst:
ein Speicherglied (28) mit einer geneigten ersten Bodenfläche (42), welches den Haufen der Fadenzuführspulen zeitweise enthält,
ein Führungsglied (30), welches die Fadenzuführspulen zu dem Trennabschnitt (23) hochführt, mit einem Spulensammelglied, welches es erleichtert, dass sich die Fadenzuführspulen in dem Führungsglied (30) an einer Stelle sammeln, wo der Trennabschnitt (23) sie aufnehmen kann, und
ein Beförderungsglied (29) für eine bestimmte Anzahl, welches zwischen dem Speicherglied (28) und dem Führungsglied (30) angeordnet ist, und das ein Schwenkglied (31) umfasst, welches kippt, um nur einer bestimmten Anzahl von Fadenzuführspulen zu erlauben, von dem Haufen der Fadenzuführspulen in dem Speicherglied (28) zu dem Führungsglied (30) befördert zu werden, wobei dieses umfasst:
eine Beförderungsplatte (32), die die Fadenzuführspulen auf einer oberen Oberfläche trägt und
eine Flusssperrwand (34), die erscheinen oder verschwinden kann.

2. Spulenlieferungsvorrichtung (12) nach Anspruch 1, **dadurch gekennzeichnet, dass** das Führungsglied (30) einen Erkennungsabschnitt (49) umfasst, der die An- oder Abwesenheit von der Fadenzuführspule in dem Führungsglied (30) erkennt, und dass das Schwenkglied (31) dergestalt ausgebildet ist, dass es abhängig von dem Erkennungsergebnis, welches in dem Erkennungsabschnitt (49) erkannt worden ist, geschwenkt wird.

3. Spulenlieferungsvorrichtung (12) nach Anspruch 1 oder 2, **dadurch gekennzeichnet, dass** das Schwenkglied (31) die vorherbestimmte Anzahl von Fadenzuführspulen aus dem Speicherglied (28) zu dem Führungsglied (30) schickt, indem es sich schwenkt, während die Fadenzuführspulen auf der Transportplatte (32) liegen, und wobei die Flusssperrwand (34) die Fadenzuführspulen daran hindert, aus dem Speicherglied (28) in das Führungsglied (30) zu fallen.

4. Spulenlieferungsvorrichtung (12) nach Anspruch 3, **dadurch gekennzeichnet, dass** eine Vielzahl von Furchen (47) entlang einer Richtung auf der oberen Oberfläche der Transportplatte (32) ausgebildet ist.

5. Spulenlieferungsvorrichtung (12) nach Anspruch 3 oder 4, **gekennzeichnet durch** eine Schneidevorrichtung (50), die den Faden, der aus der Fadenzuführspule kommt, abschneidet, wobei die Schneidevorrichtung (50) an einem Ende der Transportplatte (32) angeordnet ist.

6. Spulenlieferungsvorrichtung (12) nach einem der Ansprüche 1 bis 5, **dadurch gekennzeichnet, dass**
die erste Bodenfläche (43) auf das Beförderungsglied (29) für eine bestimmte Anzahl geneigt ist,
und die erste Bodenfläche (43) in einem Teil davon ein Spulenstauauflösungsglied (45) umfasst, das dergestalt angetrieben ist, dass es aus der ersten Bodenfläche (43) hervorsteht oder sich auf der gleichen Ebene befindet.

7. Spulenlieferungsvorrichtung (12) nach einem der Ansprüche 1 bis 6, **dadurch gekennzeichnet, dass** der Trennabschnitt (23) die Fadenzuführspulen, die von dem Führungsglied (30) geführt werden, in einer Richtung senkrecht zu einer Montagefläche des Führungsglieds (30) aufnimmt, befördert und vereinzelt.

8. Spulenlieferungsvorrichtung (12) nach einem der Ansprüche 1 bis 7, **dadurch gekennzeichnet, dass**
der Trennabschnitt (23) an einer Stelle angeordnet ist, wo der Trennabschnitt (23) die Fadenzuführspulen in dem Führungsglied (30) von einer Seite des Führungsglieds (30) aus aufnehmen kann.

9. Spulenlieferungsvorrichtung (12) nach Anspruch 8, **dadurch gekennzeichnet, dass** das Spulensammelglied eine zweite Bodenfläche (48) ist, die auf den Trennabschnitt hin geneigt ist.

10. Spulenlieferungsvorrichtung (12) nach einem der Ansprüche 1 bis 9, **gekennzeichnet durch**
einen Tablettaufsetzabschnitt, der die Fadenzuführspule, die von dem Trennabschnitt (23) vereinzelt worden ist, auf ein Transporttablett setzt, und
ein Lagerglied (51), das die vereinzelte Fadenzuführspule zeitweise lagert und zwischen dem Trennabschnitt (23) und dem Tablettaufsetzabschnitt angeordnet ist.

11. Spulenlieferungsvorrichtung (12) nach einem der Ansprüche 1 bis 10, **dadurch gekennzeichnet, dass** das Trennglied ein Spulenaufnahmeglied (26) umfasst, welches eine rechteckige Form aufweist, so dass die Fadenzuführspule darauf liegen kann, und
das Spulenaufnahmeglied (26) in einer senkrechten Richtung in Bezug auf die Montagefläche des Führungsglieds (30) angetrieben ist.

12. Spulenlieferungsvorrichtung (12) nach Anspruch 11, **dadurch gekennzeichnet, dass**
der Trennabschnitt (23) ein Berührungsglied umfasst, welches die Fadenzuführspule an einem Ende der Fadenzuführspule, das entgegengesetzt zu einem Schöpfende des Spulenaufnahmeglieds (26) angeordnet ist, berühren kann, die auf dem Spulenaufnahmeglied (26) liegt, und
dass das Berührungsglied entlang der Richtung angeordnet ist, in der die Fadenzuführspule durch das Spulenaufnahmeglied (26) gefördert wird und einen Ausstoßteil (42) aufweist, der konvex auf das Schöpfende des Fadenaufnahmeglieds (26) hin geformt ist.

13. Automatische Aufspulmaschine, **gekennzeichnet durch**:
die Spulenlieferungsvorrichtung (12) nach einem der Ansprüche 1 bis 12;
eine Vielzahl von Spulstellen, von denen jede den Faden von einer Fadenzuführspule, die von der Spulenlieferungsvorrichtung (12) vereinzelt worden ist, abzieht und den Faden zur Herstellung einer Packung wieder aufspult; und
eine Spulenbeförderungsvorrichtung (11), die die Fadenzuführspule, die von der Spulenlieferungsvorrichtung (12) vereinzelt worden ist, zu jeder der Spulstellen befördert.

## Revendications

1. Dispositif de fourniture de bobines (12), comprenant :
une section d'introduction de bobines (22) qui reçoit une pile de bobines d'alimentation en fil sur lesquelles sont enroulés des fils ; et
une section d'isolement (23) qui isole les bobines d'alimentation en fil de la pile des bobines d'alimentation en fil introduites dans la section d'introduction de bobines (22), **caractérisé en ce que** :
la section d'introduction de bobines (22) comprend :
un élément formant réservoir (28) avec une première surface inférieure inclinée (42) qui maintient momentanément la pile de bobines d'alimentation en fil,
un élément de guidage (30) qui guide les bobines d'alimentation en fil jusqu'à la section d'isolement (23) avec un élément collecteur de bobines qui facilite le regroupement des bobines d'alimentation en fil dans l'élément de guidage (30) dans une position où la section d'isolement (23) peut les récupérer, et
un élément de transport en nombre fixe (29) qui est aménagé entre l'élément formant réservoir (28) et l'élément de guidage (30) et qui comprend un élément pivotant (31) qui pivote pour permettre le transport vers l'élément de guidage (30) de seulement un nombre prédéterminé de bobines d'alimentation en fil de la pile de bobines d'alimentation en fil dans l'élément formant réservoir (28), lequel élément de transport comprend :
une plaque de transport (32) pour transporter la bobine d'alimentation en fil sur sa surface supérieure et
une paroi d'arrêt d'écoulement (34) qui peut apparaître ou disparaître.

2. Dispositif de fourniture de bobines (12) selon la revendication 1, **caractérisé en ce que** :
l'élément de guidage (30) comprend une section de détection (49) qui détecte la présence ou l'absence de la bobine d'alimentation en fil dans l'élément de guidage (30) et
l'élément pivotant (31) est amené à pivoter sur la base d'un résultat de détection obtenu dans la section de détection (49).

3. Dispositif de fourniture de bobines (12) selon la revendication 1 ou la revendication 2, **caractérisé en ce que** :
l'élément pivotant (31) envoie le nombre prédéterminé de bobines d'alimentation en fil de l'élément formant réservoir (28) à l'élément de guidage (30) par pivotement avec les bobines d'alimentation en fil passant sur la plaque de transport (32) et la paroi d'arrêt d'écoulement (34) empêche les bobines d'alimentation en fil d'affluer de l'élément de réservoir (28) à l'élément de guidage (30).

4. Dispositif de fourniture de bobines (12) selon la revendication 3, **caractérisé en ce qu'**une pluralité de rainures (47) est formée dans une seule direction sur la surface supérieure de la plaque de transport (32).

5. Dispositif de fourniture de bobines (12) selon la revendication 3 ou la revendication 4, **caractérisé par** un dispositif de coupe (50) qui coupe le fil provenant de la bobine d'alimentation en fil, le dispositif de coupe (50) étant aménagé à une extrémité de la plaque de transport (32).

6. Dispositif de fourniture de bobines (12) selon l'une quelconque des revendications 1 à 5, **caractérisé en ce que** :
la première surface inférieure (43) est inclinée vers l'élément de transport en nombre fixe (29) et
la première surface inférieure (43) comprend, dans une de ses parties, un élément anti-coincement de bobine (45) qui est entraîné juste au-dessus ou sensiblement au même niveau que la première surface inférieure (43).

7. Dispositif de fourniture de bobines (12) selon l'une quelconque des revendications 1 à 6, **caractérisé en ce que** :
la section d'isolement (23) recueille, transporte et isole les bobines d'alimentation en fil guidées par l'élément de guidage (30) dans une direction perpendiculaire à une surface d'installation de l'élément de guidage (30).

8. Dispositif de fourniture de bobines (12) selon l'une quelconque des revendications 1 à 7, **caractérisé en ce que** :
la section d'isolement (23) est située à un emplacement où la section d'isolement (23) peut recueillir les bobines d'alimentation en fil dans l'élément de guidage (30) par un côté de l'élément de guidage (30).

9. Dispositif de fourniture de bobines (12) selon la revendication 8, **caractérisé en ce que** l'élément collecteur de bobines est une seconde surface inférieure (48) qui est inclinée vers la section d'isolement (23).

10. Dispositif de fourniture de bobines (12) selon l'une quelconque des revendications 1 à 9, **caractérisé par** :
une section de mise en place sur un plateau qui place la bobine d'alimentation en fil isolée par la section d'isolement (23) sur un plateau de transport et
un élément de stockage (51) qui stocke momentanément la bobine d'alimentation en fil isolée et est aménagé entre la section d'isolement (23) et la section de mise en place sur le plateau.

11. Dispositif de fourniture de bobines (12) selon l'une quelconque des revendications 1 à 10, **caractérisé en ce que** :
l'élément d'isolement comprend un élément récepteur de bobine (26) ayant une forme rectangulaire de sorte que la bobine d'alimentation en fil puisse y passer et
l'élément récepteur de bobine (26) est entraîné dans une direction perpendiculaire à la surface d'installation de l'élément de guidage (30).

12. Dispositif de fourniture de bobines (12) selon la revendication 11, **caractérisé en ce que** :
la section d'isolement (23) comprend un élément de contact qui peut venir en contact avec la bobine d'alimentation en fil passant sur l'élément récepteur de bobine (26) à une extrémité de la bobine d'alimentation en fil qui est opposée à une extrémité de chargement de l'élément récepteur de bobine (26) et
l'élément de contact est aménagé dans la direction dans laquelle la bobine d'alimentation en fil est transportée par l'élément récepteur de bobine (26) et présente une portion de poussée (42) qui est convexe vers l'extrémité de chargement de l'élément récepteur de bobine (26).

13. Bobineuse automatique, **caractérisée par** :
le dispositif de fourniture de bobines (12) selon l'une quelconque des revendication 1 à 12 ;
une pluralité d'unités de bobinage, dont chacune débobine un fil provenant d'une bobine d'alimentation en fil isolée par le dispositif de fourniture de bobines (12) et rembobine le fil pour produire un paquet ; et
un dispositif de transport de bobines (11) qui transporte la bobine d'alimentation en fil isolée par le dispositif de fourniture de bobines (12) jusqu'à chacune des unités de bobinage.
